# EUROPÄISCHE PATENTSCHRIFT

(11) **EP 2 273 215 B1**
(45) Veröffentlichungstag und Bekanntmachung des Hinweises auf die Patenterteilung: **14.08.2013**
(21) Anmeldenummer: 10164962.2
(22) Anmeldetag: 04.06.2010
(51) Int. Cl.: F25B 15/04, F21V 29/00, F21V 29/02

(54) **Anordnung zur Lichtabgabe mit Leuchtelementen und damit gekoppeltem Kühlsystem**
Assembly for emitting light with light elements and coupled cooling system
Agencement de sortie de lumière doté d'éléments d'éclairage et système réfrigérant couplé à celui-ci

(30) Priorität: 04.06.2009 DE 202009007810 U
(43) Veröffentlichungstag der Anmeldung: 12.01.2011
(73) Patentinhaber: Zumtobel Lighting GmbH, 6850 Dornbirn (AT)
(72) Erfinder: Eberle, Alfons, 6922, Wolfurt (AT)
(74) Vertreter: Thun, Clemens

(56) Entgegenhaltungen:
- WO-A2-2004/104496
- WO-A2-2008/034152
- WO-A2-2009/035238
- US-A1- 2007 090 737
- US-A1- 2007 102 033

## Beschreibung

Die vorliegende Erfindung betrifft eine Anordnung zur Lichtabgabe mit Leuchtelementen, insbesondere LEDs, und einem Kühlsystem, das mit den Leuchtelementen gekoppelt ist.

Die Arbeitsweise einer LED-Leuchte bedingt, dass erhebliche Mengen an Wärme effektiv, schnell und zuverlässig abzuführen sind, um den Betrieb der Leuchten bzw. Leuchtmittel sicher zu stellen. Im Fall von LED-Anordnungen zur Lichtabgabe kann die erzeugte Wärme hauptsächlich nur durch Wärmeleitung von der Wärmequelle weggeführt werden. Meist wird die Wärme von einem Kühlkörper, der thermisch mit der LED-Anordnung gekoppelt ist, in die Umgebung mehr oder weniger abgestrahlt.

Allerdings ist die Leistung eines Kühlkörpers hinsichtlich der Kühlleistung begrenzt. Einer kleinen, flachen und kompakten Bauform steht die erforderliche räumliche Überdimensionierung von Kühlkörpern unter der Berücksichtigung von Sicherheitsfaktoren oftmals im Wege.

Daneben kann eine Sättigung des Kühlkörpers eintreten. Die Kühlung ist zunächst von der Temperaturdifferenz zwischen Umgebungstemperatur und Kühlkörpertemperatur abhängig. Im Betrieb kann sich bei laminarer Strömung eine Isolierschicht mit einem Temperaturgradienten an der Kühlkörperoberfläche ausbilden.

Bei LEDs besteht eine starke Temperaturabhängigkeit der Lichtausbeute, zumal der Wirkungsgrad bei der Umsetzung der elektrischen Versorgungsenergie in Lichtabstrahlung in Ansehung der kleinräumigen Abmessungen noch verbessert werden kann. Der Hauptteil der elektrischen Versorgungsleistung muß weggekühlt werden, um Effizienz und Lebensdauer der LED-Lichtquellen zu erhalten.

Im Ergebnis ist problematisch, wie bzw. wohin mit herkömmlichen Ansätzen zielführend die Ableitung von Verlustwärme einer Anordnung zur Lichtabgabe von einer einzelnen LED bis zu großflächigen Leuchtbändern wirklich zuverlässig funktionieren soll.

Allerdings wird Voranstehendes noch schwieriger, wenn die Anforderungen an die Lichtintensität bzw. eine Leuchtdichte über eine Fläche weiter erhöht werden sollen, die eingebetteten LEDs entsprechend leistungsfähiger dimensioniert werden und ein ganzer Raum gleichmäßig hell auszuleuchten ist.

US 2007/90737 offenbart eine Anordung gemäß Oberbegriff des Anspruchs 1.

Demgemäß wäre wünschenswert, eine Anordnung derart zu schaffen, dass eine Lichtabgabe durch niedrige Arbeitstemperaturen erhöht und die Wärmeabgabe unter Vermeidung der obengenannten Nachteile wirkungsvoll verbessert werden kann.

Vorstehende Aufgabe wird durch eine Anordnung zur Lichtabgabe mit Leuchtelementen gemäß dem Anspruch 1 und durch ein Verfahren zur Kühlung zur Verwendung für eine Anordnung zur Lichtabgabe mit Leuchtelementen gemäß dem Anspruch 10 gelöst. Vorteilhafte Weiterbildungen sind Gegenstand der abhängigen Ansprüche.

Demgemäß ist nach einem ersten Aspekt eine Anordnung zur Lichtabgabe mit Leuchtelementen vorgesehen, insbesondere LEDs, und einem thermisch mit mindestens einem Leuchtelement gekoppelten Kühlsystem. Die Anordnung zur Lichtabgabe und das Kühlsystem sind derart ausgestaltet, dass das Kühlsystem eine Absorptions-Kältemaschine enthält und dass die Abwärme der Leuchtelemente in der Absorptions-Kältemaschine als thermischer Antrieb vorliegt.

Indem das Kühlsystem geeignet mit der LED-Anordnung thermisch gekoppelt ist, wird eine zuverlässige Möglichkeit der Bereitstellung der Verlustwärme für die Verwendung in einer Anordnung zur Absorptionskühlung ermöglicht. Die Abwärme der Anordnung zur Lichtabgabe kann zum Beispiel über eine massive Platte an das Kühlsystem weitergeben werden.

Weiter gelingt zuverlässig, die zunächst eher punktförmig, gerichtet und konzentriert entstehende Abwärme der LED sicher und schnellst möglich abzuleiten.

Bei Verwendung von wärmetragfähigen Kühlflüssigkeiten, bevorzugt kompressiblen bzw. verdampfenden Medien oder Flüssigkeitsgemischen, erhöht sich die Leistungsfähigkeit jedes einzelnen Elements der Beleuchtungsanordnung erheblich. Die Risiken einer starken Temperaturtrift entfallen. Die Dimensionierung der Kühlung gelingt zuverlässig und haltbar.

Sodann kann die Wärmeableitung auch in an sich gewohnter Weise über die Leiterplatte bzw. Platine über Metallisierungen als auch anliegende Kühlprofile erfolgen, die mit Teilen des Kühlsystems thermisch verbunden sind und die Anordnung zur Lichtabgabe durchziehen.

Die Leiterplatte, die die LEDs trägt und umfangreiche Aufgaben zu bewerkstelligen hat, wird bei ihrer hohen thermischen Verantwortung für die Anordnung mit Leuchtelementen unterstützt und in ihrer Herstellung vereinfacht.

Die besonders gute Kühlung der Anordnung zur Lichtabgabe mittels Kühlmedien im Zusammenhang mit Kreisprozessen bei Kältemaschinen erlaubt es, die erreichbaren Lichtströme pro Flächeneinheit erheblich zu erhöhen. Die gewohnte Zuverlässigkeit und etwaige Sicherheitsabschläge können beibehalten werden.

Vorstehende LED-Anordnung besitzt damit in jeder Hinsicht eine hohe Verfügbarkeit, Einsatzfähigkeit und Betriebssicherheit. Die Anordnung zur Lichtabgabe kann mit einer großen Strahlungsleistung wirtschaftlich, günstig und einfach hergestellt werden.

Hinsichtlich der Bauform der Anordnung zur Lichtabgabe können modulare oder kompakte Ausführungen mit günstigen baulichen Abmessungen erreicht werden.

Weiterhin besteht die Kompatibilität zu üblichen Fertigungsprozessen der einzelnen mechanischen Komponenten der Anordnung zur Lichtabgabe, einschließlich der Leiterplatten- und Elektronikfertigung.

Nach vorstehendem ersten Aspekt der Erfindung wird in bemerkenswerter Weise die von der LED-Einheit erzeugte, unter Umständen sehr hohe Verlustleistung im thermischen Spektralbereich abgeführt und in der Absorptions-Kältemaschine als Antrieb weiterverwendet.

Von anderen Baugruppen wie zum Beispiel dem Lichtaustrittelement oder einer Optik wird die Verlustleistung ferngehalten, gerade wenn alternative Optiken mit flexiblen Werkstoffen eingesetzt werden, die niedrigere Temperaturen bevorzugen. Hohe Lichtleistungen können sicher bereitgestellt, übertragen und wirkungsvoll gesteuert, z.B. gedimmt, werden. Weiterhin wird die Elektronik zur Ansteuerung der LEDs von externer Wärmebeaufschlagung befreit, dort erzeugte Verlustleistung der Leistungsbauelemente wird abgeführt.

Das Leuchtmittel, insbesondere jede einzelne LED, wird wohltemperiert im optimalen Arbeitsbereich gehalten. Die Abwärme kann besonders vorteilhaft und zuverlässig abgeführt werden.

Im Ergebnis kann demgemäß der Betrieb der Anordnung mit Leuchtelementen durch das Kühlsystem mit einer Absorptions-Kältemaschine so verbessert werden, dass ein synergetischer Effekt über mehrere Systemebenen hindurch in der Optimierung der Gesamtenergiebilanz eintritt.

Nach einem zweiten Aspekt ist die vorliegende Anordnung zur Lichtabgabe **dadurch gekennzeichnet, dass** die Absorptions-Kältemaschine derart ausgestaltet ist, dass ein Lösemittelkreislauf und ein Kühlmittelkreislauf verbunden sind und ein verdichtbares Kühlmittel vorliegt.

Nach einem dritten Aspekt ist die Anordnung zur Lichtabgabe gemäß dem zweiten Aspekt **dadurch gekennzeichnet, dass** das Kühlmittel aus einem für die Absorptions-Kältemaschine geeigneten Stoffpaar, wie zum Beispiel Silikagel/Wasser gebildet wird.

Ferner können für das Kühlmittel bzw. verdichtetes Kältemittel auch andere geeignete Kombinationen wie Ammoniak/Wasser oder Zeolith/Wasser, jeweils optional mit Additiven, beispielsweise zur Verdunstungsförderung oder eventuell auch Gase bzw. Plasmen eingesetzt werden.

Nach einem vierten Aspekt ist die Anordnung zur Lichtabgabe gemäß dem zweiten bis dritten Aspekt **dadurch gekennzeichnet, dass** der Lösemittelkreislauf zwei benachbarte Kammern aufweist, die als Austreiber und als Absorber ausgebildet und über ein erstes Ventil verbunden sind. Der Austreiber und der Absorber können sich in einem Behälter (beispielsweise zwei Halbschalen) befinden und über einen Zwischenhohlraum, poröse Zwischenwände bzw. eine Isolierung beabstandet sein. Bei dem Ventil kann auch ein Magnetventil oder ein Steuerschieber bzw. Stellzylinder in Verbindung mit einer Regelung vorgesehen sein.

Nach einem fünften Aspekt ist die Anordnung zur Lichtabgabe gemäß dem zweiten bis vierten Aspekt **dadurch gekennzeichnet, dass** der Kühlmittelkreislauf zwei benachbarte Kammern aufweist, die als Kondensator und Verdampfer ausgebildet und über ein zweites Ventil verbunden sind. Der Kondensator und der Verdampfer können sich in einem Behälter befinden und über einen Zwischenhohlraum, poröse Zwischenwände bzw. eine Isolierung beabstandet sein. Bei dem Ventil kann ein Magnetventil oder Stelltrieb mit einer Regelung vorgesehen sein.

Nach einem sechsten Aspekt ist die Anordnung zur Lichtabgabe gemäß dem zweiten bis fünften Aspekt **dadurch gekennzeichnet, dass** die beiden Kammern im Lösemittelkreislauf über eine Leitung verbunden ist, in der sich eine Pumpe befindet. Bei der Pumpe liegt im Rahmen der Kältemaschine bevorzugt ein Verdichter vor. Allerdings kann für einen sog. thermischen Transformator statt oder neben der Pumpe auch eine Drossel vorliegen. Unter dem Lösemittel soll ein gelöstes bzw. in Lösung gegangenes Kühlmittel bzw. Kältemittel, modellhaft als Wärme lösendes Mittel, verstanden werden.

Nach einem siebten Aspekt ist die Anordnung zur Lichtabgabe gemäß dem sechsten Aspekt **dadurch gekennzeichnet, dass** der Lösemittelkreislauf und der Kühlmittelkreislauf durch Kammern in einem Kühlkörper mit Zwischenwänden beabstandet sind. Vorstehende Zwischenwände können aus einem wärmeleitenden oder isolierenden Material gefertigt sein oder Hohlraum einschließlich Vakuum aufweisen.

Nach einem achten Aspekt ist die Anordnung zur Lichtabgabe gemäß dem siebten Aspekt **dadurch gekennzeichnet, dass** die Abwärme der Leuchtelemente in der als Austreiber ausgebildeten Kammer des Lösemittelkreislaufs als thermischer Antrieb vorliegt.

Nach einem neunten Aspekt ist die Anordnung zur Lichtabgabe gemäß dem achten Aspekt **dadurch gekennzeichnet, dass** sich die Absorptions-Kältemaschine in einem Gehäuse mit den Leuchtelementen befindet. Vorgenanntes Gehäuse kann bevorzugt als Kühlkörper mit Oberflächenprofilierung und Lamellen ausgeführt sein. Die Außenwand des Kühlkörpers kann eine Riffelung bzw. Vorsprünge und Ausnehmungen aufweisen. Im Inneren kann der Kühlkörper auch blockartig mit Einrichtungen, Kammern oder Vorrichtungen zum Einlegen, Rasten oder Einklemmen von Leitungen (snap-in) ausgestaltet sein. In beispielsweise zwei lösbar verbundenden bzw. fügbaren Halblöcken bzw. Gegenstücken oder Halbschalen können die Teile der Anordnung zur Lichtabgabe, einschließlich mindestens einer Leiterplatte und der Absorptions-Kältemaschine nach den obenstehenden Aspekten untergebracht sein. Im Kühlkörper bzw. in den angrenzenden Innenflächen können Ausnehmungen bzw. Kanäle für Leitungen mit danebenliegenden Dichtflächen für die Zwischenverbindungen zwischen den Bestandteilen der Anordnung zur Lichtabgabe vorgesehen sein.

Nach einem zehnten Aspekt ist ein Verfahren zur Kühlung einer Anordnung zur Lichtabgabe mit Leuchtelementen, insbesondere LEDs, mit Hilfe eines thermisch mit den Leuchtelementen gekoppelten Kühlsystems **dadurch gekennzeichnet, dass** die Wärme eines mit den Leuchtelementen gekoppelten Kühlkörpers den Austreiber einer Absorptions-Kältemaschine beheizt.

Vorstehendes Leuchtenbauteil kann auch als Behälter, Kessel, Tank oder dreidimensional ausgeformte schmale Hohlkammer ausgeführt sein. Im Fall eines Reflektors kann an der Seite, die der Lichtquelle zugewandt ist, eine optisch glänzende Oberfläche ausgebildet sein kann.

Bei der LED-Anordnung der vorliegenden Erfindung ist nach einer bevorzugten Ausführungsform die thermische Kopplung der LEDs mit einer Absorptions-Kältemaschine im weitesten Sinne vorgesehen. Wie bereits angesprochen, erlaubt die Eingliederung der Kühlung in die Beleuchtung und umgekehrt, auf den ersten Blick völlig wesensverschiedene Teile, Vorteile bei der Energieverteilung. Der Schwerpunkt der Kopplung liegt in der Kombination der Kältemaschine mit der LED-Anordnung. Die herausragenden Vorteile der vorliegenden Erfindung bestehen also im Bereich der Überlappung, als Schnittmenge der Merkmale bzw. an der Schnittstelle zwischen dem Bereich der Verbindung von der Lichterzeugung und der Kälteerzeugung.

Im Ergebnis wird die LED-Anordnung zur Lichtabgabe mit Leuchtelementen mit Hilfe der Absorptions-Kältemaschine in die Lage versetzt, hohe Lichtleistungen sicher umzusetzen. Die LED-Anordnung wird somit noch zuverlässiger, über lange Zeit noch wartungsfreier und vor thermischer Ermüdung, vorzeitiger Alterung, plötzlichem Betriebsausfall oder Überhitzung bewahrt.

Nachfolgend soll die Erfindung anhand der beiliegenden Zeichnung näher erläutert werden. Es zeigen:

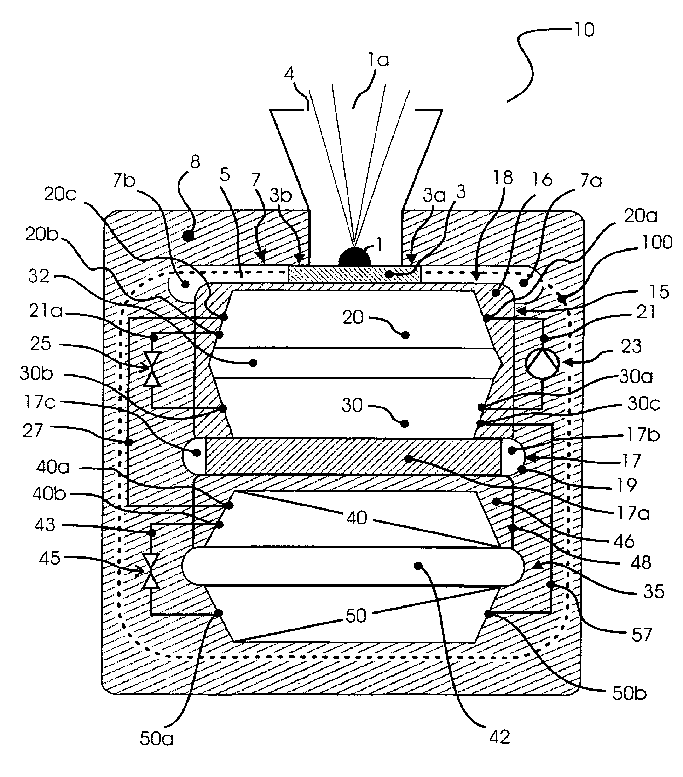

- Fig. 1: die Ansicht einer erfindungsgemäßen Anordnung zur Lichtabgabe mit verbundenem Kühlsystem.

In Fig. 1 ist eine Anordnung zur Lichtabgabe 10 mit Leuchtelementen, insbesondere LEDs 1, entsprechend einer Ausführungsform der vorliegenden Erfindung von der Seite dargestellt, wobei die LEDs 1 mit einem Kühlsystem 100 gekoppelt sind.

Die Anordnung zur Lichtabgabe 10 befindet sich in einem Gehäuse bzw. einem Kühlkörper 8. Die Anordnung zur Lichtabgabe 10 kann sich entlang der Zeichnungsebene in die Tiefe erstrecken, so dass eine längliche Anordnung wie eine Profilschiene mit beabstandeten einzelnen LEDs oder Verbänden als LEDs vorliegen mag, die durch die LED 1 zusammengefasst wurden bzw. betrachtet werden.

Die Lichtabgabe bzw. Abstrahlung der LED 1 verläuft durch die Lichtsaustrittsöffnung 4 (vereinfacht anhand der von der LED ausgehenden Strahlen 1a als Bündel angedeutet, dargestellt). Als Leuchtmittel können neben den bevorzugten LEDs auch andere Lichtquellen zum Einsatz kommen.

Die Leuchtelemente sind wie (die rein beispielshaft als Hemisphäre ausgeführte) LED 1, auf einem Träger (Substrat), beispielsweise auf einer Platine oder Leiterplatte 3 angeordnet, montiert oder beispielsweise verlötet.

Die Leiterplatte 3 übernimmt neben der Energieversorgung über Anschlußdrähte, oder Anschlußfelder (pads), die Ableitung bzw. Weiterleitung der thermischen Verlustleistung als die bei der Lichterzeugung entstehende Abwärme der Anordnung zur Lichtabgabe.

Vorliegend liegt der Wärmeaustausch mit dem Kühlsystem 100 flächig über die Leiterplatte 3 vor. Vereinfacht sei die Leitplatte 3 (im Rahmen der üblichen Betriebsfrequenzen und Versorgungsspannungen) als elektrisch isolierend und (im Rahmen der zu übertragenden Energien) als thermisch leitend angenommen. Die Leiterplatte 3 ist Teil eines Bereiches 5, der eine Wandung 7 aufweist, die Bereiche 7a und 7b enthält.

Teilweise grenzt die Leiterplatte 3 an den Stellen 3a und 3b auch an den massiven Kühlkörper 8 im Bereich des Lichtsaustritts bzw. der Lichtaustrittsöffnung 4. Übrigens kann die Leiterplatte 3 auch den Kühlkörper 8 sozusagen überlappen, d.h., in dem Kühlkörper 8 kann eine Ausnehmung als zurückgesetzte Ecke, bzw. ein Rücksprung (als geometrisches Gegenteil eines Vorsprungs) vorliegen, so dass die Leiterplatte 3 nach oben um ihre Dicke versetzt ist.

Vorstehendes Angrenzen oder Überlappen der Leiterplatte 3 in Beziehung mit dem Kühlkörper 8 kann beispielsweise vorgesehen sein, falls eine Masseverbindung mit der Leiterplatte oder ein gerichteter elektrischer bzw. thermischer Energieversorgungsaustausch zwischen Leiterplatte 3 und Kühlkörper 8 vorliegt.

Gleichfalls versteht sich, dass der Überlappungsbereich an den Stellen 3a und 3b sich aber auch lediglich auf die entsprechend benachbarten Ecken beschränken kann (verbreiterte Lichtaustrittsöffnung 4) oder ein Abstand bzw. eine Lücke oder eine Isolierschicht zwischen der Leiterplatte 3 zu dem Kühlkörper 8 vorliegen kann.

Die Bereiche 7a und 7b, in Fig. 1 rein beispielhaft freigelassen, können leer sein, aber alternativ auch aus einem thermisch isolierenden bzw. leitenden Material gefüllt sein.

Im Rahmen des Kühlsystems 100 sind ein Lösemittelkreislauf 15 und ein Kühlmittelkreislauf 35 durch eine Zwischensicht 17 getrennt. Der Lösemittelkreislauf 15 und der Kühlmittelkreislauf 35 sind in dem Kühlkörper 8 angeordnet. Im Kühlkörper 8 können Ausnehmungen für die Zwischenschicht in Verbindung mit Ausnehmungen für den Lösemittelkreislauf 15 und den Kühlmittelkreislauf 35 vorgesehen sein.

Die Zwischenschicht 17 kann nach Fig. 1 zum Beispiel ein Element sein, das einen Zwischenhohlraum 17a aufweist (als nach rechts verlaufende Schraffur gezeigt), wobei der Zwischenhohlraum 17a durch eine herum bzw. umlaufende Wand 19 definiert bzw. abgegrenzt ist. Rechts und links um den Zwischenhohlraum 17a sind freie Bereiche 17b und 17c dargestellt.

Die umlaufende Wand 19 kann beispielshalber - und das gilt für alle Wände in der gesamten Anordnung zur Lichtabgabe 10 -auch eine Schicht, Mehrfachschicht oder eine Folge von Lagen (Multilayer) sein. Falls die Wand beispielsweise aus Metall ist, kann sie z.B. mindestens einlagig mit einem Kunststoff oder einem Katalysator überzogen (oder umgekehrt), galvanisiert, lackiert, bemustert oder profiliert sein. Der Katalysator unterstützt die Funktionen in den einzelnen Aggregaten, beispielsweise das Verdunsten oder Kondensieren einer Flüssigkeit durch Bereitstellung einer großen Oberfläche.

Der Hohlraum 17a in der Zwischenschicht 17 kann entweder als Isolierschicht bzw. Isolator oder Wärmespeicher ausgeführt sein. Wenn erwünscht, kann der Hohlraum 17a in thermischer Hinsicht (Wärmekapazität) einen Einfluß auf die Kopplung bzw. Abkopplung (d.h. Grad der Energieübertragung) des Lösemittelkreislaufes 15 und des Kühlmittelkreislaufes 35 haben.

Für einen Wärmespeicher oder -puffer kann die um die Zwischenschicht 17 umlaufende Wand 19 thermisch durchlässig sein. Im Inneren des Hohlraums 17a kann die Zwischenschicht 17 als Speicherstoff ausgeführt sein bzw. ein Granulat aus einem Stein, bzw. Zeolitpulver, Schamot, oder feinem Sand aufweisen. Daneben kann als Füllung des Hohlraums ein Feststoff, beispielsweise eine Sinterkeramik, ein dielektrischer oder ein magnetischer Werkstoff, etwa Ferrit, ein Metall oder eine Legierung oder eine Gel-artige verdickte Flüssigkeit vorliegen, daneben kann Holz oder Ziegel, Schiefer, Granit oder ein Magnet vorhanden sein.

Für einen Isolator kann die Zwischenschicht 17 mit oder ohne die freien Bereiche 17b bzw. 17c mit einem Stoff mit einem hohen Wärmewiderstand (Isolierstoff) gefüllt sein. Vorstehend kann der Hohlraum leer bleiben, mit einem Gas oder mit Stoffen, die Lufteinschlüsse aufweisen, gefüllt sein (Schaumstoff, Hartschaum, Wolle).

Gegebenenfalls kann die Zwischenschicht 17 aber auch Puffereigenschaften für das Kühlmittel aufweisen oder als Transferschicht mit Adhäsionskanälen für das Kühlmittel zwischen verschiedenen, bevorzugt benachbarten Bauteilen der Anordnung dienen.

Im Lösemittelkreislauf 15 sind ein Austreiber 20 und ein Absorber 30 angeordnet.

Um den Austreiber 20 und den Absorber 30 herum ist noch ein Bereich 16 vorgesehen, der von einer Wandung 18 umschlossen ist.

Beispielsweise kann im Bereich 16 eine Ausnehmung für den Austreiber 20 und den Absorber 30 vorgesehen sein bzw. können beide vorstehenden Bauteile als Teil zum Einschieben in eine Ausnehmung des Kühlkörpers 8 vorgesehen sein.

Der Auslass 30b des Absorbers 30 ist über eine Verbindung 21, etwa eine Leitung, mit dem Einlass 20a des Austreibers 20 verbunden. Für die Förderung des Kühlmittels im Lösemittelkreislauf 15 durch die Verbindung 21 liegt die erste Pumpe 23 (Lösemittelkreislaufverdichter) vor.

Am Auslass 20b des Austreibers 20 liegt eine Leitung bzw. Verbindung 21a zurück zum Einlass 30a des Absorbers 30 vor, wobei ein Ventil 25 in der Verbindung 21a vorgesehen ist.

Der Austreiber 20 und der Absorber 30 sind durch einen Zwischenraum 32 getrennt, der rein beispielshaft als Hohlraum ausgeführt ist. Für den Zwischenraum 32, der auch durchlässig sein kann, gilt allerdings das oben Gesagte, wie bei der Zwischenschicht 17, entsprechend.

In der Zeichnung, rein beispielshaft unter dem Lösemittelkreislauf 15 liegend dargestellt, ist im Kühlmittelkreislauf 35 ein Kondensator 40 und ein Verdampfer 50 vorgesehen. Statt untereinander kann der Lösemittelkreislauf 15 und der Kühlmittelkreislauf 35 auch nebeneinander oder höhenversetzt mit entsprechender Leitungsführung angeordnet werden, wobei an dem Kondensator auch ein eigener Kühlkörper angebracht sein kann bzw. umgekehrt ein Kühlkörper eine Ausnehmung für den Kondensator aufweisen kann.

Der Kondensator 40 wurde in Fig. 1 wie ein Trapez dargestellt, wobei die Diagonale die Wandlung die Kondensation bzw. stattfindende Phasenübergange von gasförmig nach flüssig andeuten soll.

Bei dem Verdampfer 50 gilt Vorstehendes entsprechend mit umgekehrter Diagonale. Vorstehend können entsprechende Phasenübergängen von (fest bzw.) flüssig nach gasförmig auch als reiches Gemisch (siedende Lösung) bezeichnet werden.

Der Auslass 20c des Absorbers 20 (hier wurde Auslass 20c im Austreiber 20 über dem Auslass 20b angeordnet) ist mit dem Einlass des Kondensators 40a des Kondensators 40 des Kühlkreislaufes 35 über die Leitung bzw. Verbindung 27 verbunden. Dort kann sich übrigens (außerhalb der Zeichnung) auch ein Ventil, eine Pumpe oder ein Filter befinden. Vom Auslass 40b des Kondensators 40 verläuft eine Leitung bzw. Verbindung 43 mit Ventil 45 zum Einlass 50a des Verdampfers 50.

Weiterhin verläuft vom Auslass 50b des Verdampfers 50 eine Leitung bzw. Verbindung 57 in den Einlass 30c des Absorbers 30 des Lösemittelkreislaufes 15. In der Verbindung 57 kann sich übrigens (außerhalb der Zeichnung) auch ein Ventil, eine Pumpe oder ein Filter befinden.

Ein wesentliches Merkmal des Kühlkreislaufs 35, also der Anordnung mit Verdampfer 50 und Kondensator 40, ist, dass das zu kondensierende Kühlmittel extern, alleinig aus dem Absorber 20 stammt. Ferner ist ein Zwischenbereich 42 zwischen Verdampfer 50 und Kondensator 40 vorgesehen. Vorliegend ist der Zwischenbereich 42 wiederum zunächst als ein Hohlraum in der Fig. 1 angedeutet, lediglich von einer Wandung 44 umschlossen und innen leer.

Allerdings gilt weiterhin für den Zwischenbereich 42, der jeweils auch als Isolierschicht bzw. Wärmespeicherschicht ausgelegt, bzw. gefüllt sein kann, wiederum das oben bereits für die Zwischenschicht 17 Gesagte.

Darüberhinaus kann auch der Zwischenbereich 42 genauso gut auch eine sog. Mehrfunktionsschicht sein, die also neben der Isolierung bzw. Wärmespeicherung auch bzw. dennoch einen Flüssigkeitsdurchgang erlaubt, falls sie durchlässig bzw. als semipermeable Membran ausgeführt ist. Beispielsweise kann sich anbieten, dass die kondensierte Flüssigkeit auch durch den Zwischenbereich 42 hindurchgeht, dort teilweise aufgesaugt oder verzögert hindurch diffundieren kann (Flüssigkeitsspeicher bzw. -puffer).

Die Zwischenschicht 42 kann schließlich auch flexible Wände mit einer Wanddicke aufweisen und somit für die Übertragung von Funktionen bezüglich Temperatur, Wärmestrahlung, Druck und Flüssigkeit bzw. Materie zuständig sein. Vorstehendes gilt auch für die Zwischenschicht 17.

Um den Kondensator 40 herum ist noch ein Bereich 46 vorgesehen, der von einer Wandung oder Schicht 48 umschlossen ist. Beispielsweise kann im Bereich 46 eine Ausnehmung für den Kondensator 40 vorgesehen sein bzw. der Kondensator 40 als Teil zum Einschieben in eine Ausnehmung des Kühlkörpers 8 vorgesehen sein.

Im Ergebnis ähnelt (vereinfacht ausgedrückt) die vorliegende Anordnung einem lageunabhängigen Wärmerohr bzw. -übertrager bzw. einer sog. Heatpipe. Vorstehend ist allerdings eine beliebige Geometrie möglich. Weiter gelingt eine analoge Nutzung einer ausgedehnten Oberfläche als Kühlfläche mittels chemischer Adsorption.

Bei der Funktion der vorstehenden Anordnung zur Lichtabgabe nutzt die vorliegende Erfindung nun die Wärmeenergie der Kühlkörper, um über den Mechanismus, der in Absorptions-Kältemaschine verwirklich wird, die Anordnung zur Lichtabgabe bzw. die LED-Lichtquellen, zu kühlen.

Das verdichtete Kältemittels eines Stoffpaares, dass für den Temperaturbereich geeignet ist, z.B. Silikagel/Wasser wird mittels thermischem Antrieb im Austreiber aus der Lösung verdampft.

Nach geleisteter Arbeit wird das Kältemittel zum Abschluß des thermodynamischen Kreisprozesses wieder kondensiert und absorbiert.

Vorstehendes geschieht vorzugsweise in zwei geschlossenen Kreisläufen mit kältemittelreicher und kältemittelarmer Lösung. Denkbar wäre wohl auch, den Lösemittelkreislauf 15 mit dem Kühlmittelkreislauf 35 zu überlappen bzw. eventuell den gesamten Kühlvorgang in einem Kreislauf, in einer Kammer oder in einer Kammer mit Unterteilungen, Abschnitten bzw. verschiedenen Temperatur, Konzentrations- und Druckzonen zu realisieren.

Dadurch, dass die Wärmequelle selbst gekühlt wird, stellt sich bei vorstehendem Kühlprozess ein Gleichgewicht ein, das durch verschiedene Parameter beeinflusst werden kann und somit sinnvoll stabil eingestellt bzw. geregelt werden kann.

Besonders günstig ist, dass je heißer die Quelle ist, desto höher die Kühlleistung wird. Somit gelingt, besonders vorteilhaft, eine optimale Kühlung der Anordnung zur Lichtabgabe, die nämlich leistungsangepasst ist.

Wenn also die LED in ihrer Leistung geregelt oder gedimmt wird, wird auch die Kühlung vom System schritthaltend mitverändert, wobei sich bei der Anordnung nach Fig. 1 mit kurzen Verbindungen geringe Antwort-Zeitkonstanten der Kältemaschine auf Verlustleistungsänderungen der Anordnung zur Lichtabgabe erreichen lassen.

Durch vorstehende erneute Nutzung der Abwärme im Rahmen eines Kühlsystems auf der Basis der Absorptionskältemaschine entsteht im Endeffekt eine Effizienzsteigerung. Vorstehend gelingt also eine verbessere Lichtausbeute bei gleichem Energieeinsatz, welches weiter durch geringere Kühlkörpervolumina belohnt wird und sich in einer Gewichtsersparnis erkenntlich zeigt. Zudem erfolgt die Kühlung unmerklich und vollkommen geräuschlos.

Mit der vorliegenden Erfindung wird somit durch die Kombination der Anordnung zur Lichtabgabe mit Absorptionskältemaschine eine einfache, elegante und wirkungsvolle Möglichkeit geschaffen, einen wohltemperierten Bereich einer LED-Anordnung, insbesondere einer Leuchte mit einzelnen LED-Leuchtelementen einer LED-Leuchte zu fördern, eine optisch ästhetische Gesamterscheinung für den Betrachter zu erzeugen, den Kühlkörper und die Materialkosten zu reduzieren und darüberhinaus einen Beitrag für den Schutz von Klima und Ressourcen zu leisten.

Darüber hinaus sind die Möglichkeiten bei der Lichtabgabe der LED-Anordnung auch bei flächenartigen Beleuchtungsanordnungen durch direkte Kühlung auch unter hohen Lichtströmen so gut, dass LED-Einheiten aufgrund der mit geringem Aufwand gut dimensionierbaren und schnell verfügbaren Kühlreserven (anpassende Kühlung) selbst bei hohen Umgebungstemperaturen und maximalen Lichtleistungen bei optimalen Temperaturen betrieben und in ihren Eigenschaften in Verbänden aus Leuchtbändern oder als Array aus LED-Arrays optimal organisiert werden können.

Eindrucksvoll kann gerade mittels der Absorptionskältemaschine in der Nähe oder integriert in einer Leuchte die Anordnung zur Lichtabgabe auch soweit heruntergekühlt werden, bzw. die geforderten Temperaturdifferenzen erreicht, gegebenenfalls oder auch übertroffen werden, wie von der Anwendung oder vom Anwender gewünscht.

Schließlich liegt durch die Abgabe der Wärme mittels der erfindungsgemäßen Ausgestaltung eine sichere und zuverlässige Wärmeableitung vor, die die LED-Anordnung in allen Fällen, auch bei erhöhter Lichtausgabe geeignet entlastet und nach allem eine optimierte Gesamtanordnung erschafft.

## Patentansprüche

1. Anordnung zur Lichtabgabe (10) mit Leuchtelementen, insbesondere LEDs (1), und einem thermisch mit den Leuchtelementen (1) gekoppelten Kühlsystem (100),
**dadurch gekennzeichnet,**
**dass** das Kühlsystem (100) eine Absorptions-Kältemaschine (20, 30, 40, 50) beinhaltet und dass die Abwärme der Leuchtelemente (1) in der Absorptions-Kältemaschine (20, 30, 40, 50) als thermischer Antrieb vorliegt.

2. Anordnung zur Lichtabgabe (10) gemäß Anspruch 1,
**dadurch gekennzeichnet,**
**dass** die Absorptions-Kältemaschine derart ausgestaltet ist, dass ein Lösemittelkreislauf (15) und ein Kühlmittelkreislauf (35) verbunden sind und ein verdichtbares Kühlmittel vorliegt.

3. Anordnung zur Lichtabgabe (10) gemäß Anspruch 2,
**dadurch gekennzeichnet,**
**dass** das Kühlmittel aus einem für die Absorptions-Kältemaschine geeigneten Stoffpaar, wie zum Beispiel Silikagel/Wasser gebildet wird.

4. Anordnung zur Lichtabgabe (10) gemäß Anspruch 2 bis 3,
**dadurch gekennzeichnet,**
**dass** der Lösemittelkreislauf (15) zwei benachbarte Kammern aufweist, die als Austreiber (20) und als Absorber (30) ausgebildet und über ein erstes Ventil (25) verbunden sind.

5. Anordnung zur Lichtabgabe gemäß einem der Ansprüche 2 bis 4,
**dadurch gekennzeichnet,**
**dass** der Kühlmittelkreislauf (35) zwei benachbarte Kammern aufweist, die als Kondensator (40) und Verdampfer (50) ausgebildet und über ein zweites Ventil (45) verbunden sind.

6. Anordnung zur Lichtabgabe (10) gemäß einem der Ansprüche 2 bis 5,
**dadurch gekennzeichnet,**
**dass** die beiden Kammern im Lösemittelkreislauf (15) über eine Leitung (21) verbunden sind, in der sich eine Pumpe (23) befindet.

7. Anordnung zur Lichtabgabe (10) gemäß Anspruch 6,
**dadurch gekennzeichnet,**
**dass** der Lösemittelkreislauf (15) und der Kühlmittelkreislauf (15) durch Kammern in einem Kühlkörper (8) mit Zwischenwänden (32, 17, 42) beabstandet sind.

8. Anordnung zur Lichtabgabe (10) gemäß Anspruch 7,
**dadurch gekennzeichnet,**
**dass** die Abwärme der Leuchtelemente (1) in der als Austreiber (20) ausgebildeten Kammer des Lösemittelkreislaufs (15) als thermischer Antrieb vorliegt.

9. Anordnung zur Lichtabgabe (10) gemäß Anspruch 8,
**dadurch gekennzeichnet,**
**dass** sich die Absorptions-Kältemaschine (100) in einem Gehäuse (8) mit den Lichtquellen (1) befindet.

10. Verfahren zur Kühlung (100) einer Anordnung zur Lichtabgabe (10) mit Leuchtelementen (1), insbesondere LEDs, mit Hilfe eines thermisch mit den Leuchtelementen (1) gekoppelten Kühlsystems (100, 20, 30, 40, 50),
**dadurch gekennzeichnet,**
**dass** die Wärme eines mit den Lichtquellen (1) gekoppelten Kühlkörpers (8) den Austreiber (20) einer Absorptions-Kältemaschine (100) beheizt.

## Claims

1. An arrangement for emitting light (10) having luminous elements, in particular LEDs (1), and a cooling system (100) thermally coupled to the luminous elements (1),
**characterised in that**
the cooling system (100) contains an absorption-type refrigerating machine (20, 30, 40, 50), and **in that** the waste heat of the luminous elements (1) is available as a thermal drive in the absorption-type refrigerating machine (20, 30, 40, 50).

2. An arrangement for emitting light (10) according to claim 1,
**characterised in that**
the absorption-type refrigerating machine is configured in such a way that a solvent circuit (15) and a coolant circuit (35) are connected, and a condensable coolant is available.

3. An arrangement for emitting light (10) according to claim 2,
**characterised in that**
the coolant is constituted of a pair of materials, such as, for example, silica gel/water, that is suitable for the absorption-type refrigerating machine.

4. An arrangement for emitting light (10) according to claim 2 to 3,
**characterised in that**
the solvent circuit (15) has two adjacent chambers that are formed as extractor (20) and absorber (30) and are connected by way of a first valve (25).

5. An arrangement for emitting light according to one of claims 2 to 4,
**characterised in that**
the coolant circuit (35) has two adjacent chambers which are formed as condenser (40) and evaporator (50) and are connected by way of a second valve (45).

6. An arrangement for emitting light (10) according to one of claims 2 to 5,
**characterised in that**
the two chambers in the solvent circuit (15) are connected by way of a line (21) in which a pump (23) is located.

7. An arrangement for emitting light (10) according to claim 6,
**characterised in that**
the solvent circuit (15) and the coolant circuit (15) are spaced apart by chambers in a cooling body (8) with partition walls (32, 17, 42).

8. An arrangement for emitting light (10) according to claim 7,
**characterised in that**
the waste heat of the luminous elements (1) is available as a thermal drive in the chamber of the solvent circuit (15) that is formed as an extractor (20).

9. An arrangement for emitting light (10) according to claim 8,
**characterised in that**
the absorption-type refrigerating machine (100) is located in a housing (8) having the light sources (1).

10. Method for cooling (100) an arrangement for emitting light (10) having luminous elements (1), in particular LEDs, with the aid of a cooling system (100, 20, 30, 40, 50) that is thermally coupled to the luminous elements (1),
**characterised in that**
the heat of a cooling body (8) coupled to the light sources (1) heats the extractor (20) of an absorption-type refrigerating machine (100).

## Revendications

1. Ensemble de sortie de lumière (10) comprenant des éléments lumineux, en particulier des LED (1), et un système de refroidissement (100) couplé de manière thermique aux éléments lumineux (1),
**caractérisé en ce**
**que** le système de refroidissement (100) comporte une machine frigorifique à absorption (20, 30, 40, 50), et en ce que la chaleur perdue des éléments lumineux (1) se présente sous la forme d'un entraînement thermique dans la machine frigorifique à absorption (20, 30, 40, 50).

2. Ensemble de sortie de lumière (10) selon la revendication 1,
**caractérisé en ce**
**que** la machine frigorifique à absorption est configurée de telle manière qu'un circuit de solvant (15) et un circuit de réfrigérant (35) sont reliés, et en ce qu'est présent un réfrigérant pouvant être comprimé.

3. Ensemble de sortie de lumière (10) selon la revendication 2,
**caractérisé en ce**
**que** le réfrigérant est formé à partir d'une combinaison de deux substances appropriée à la machine frigorifique à absorption, telle que par exemple la combinaison de gel de silice et d'eau.

4. Ensemble de sortie de lumière (10) selon la revendication 2 à 3,
**caractérisé en ce**
**que** le circuit de solvant (15) présente deux chambres adjacentes, lesquelles sont réalisées sous la forme d'un extracteur (20) et d'un absorbeur (30) et sont reliées par l'intermédiaire d'une première soupape (25).

5. Ensemble de sortie de lumière selon l'une quelconque des revendications 2 à 4,
**caractérisé en ce**
**que** le circuit de réfrigérant (35) présente deux chambres adjacentes, lesquelles sont réalisées sous la forme d'un condensateur (40) et d'un évaporateur (50) et sont reliées par l'intermédiaire d'une deuxième soupape (45).

6. Ensemble de sortie de lumière (10) selon l'une quelconque des revendications 2 à 5,
**caractérisé en ce**
**que** les deux chambres sont reliées dans le circuit de solvant (15) par l'intermédiaire d'une conduite (21), dans laquelle se trouve une pompe (23).

7. Ensemble de sortie de lumière (10) selon la revendication 6,
**caractérisé en ce**
**que** le circuit de solvant (15) et le circuit de réfrigérant (35) sont espacés par des chambres dans un dissipateur thermique (8) présentant des parois intermédiaires (32, 17, 42).

8. Ensemble de sortie de lumière (10) selon la revendication 7,
**caractérisé en ce**
**que** la chaleur perdue des éléments lumineux (1) se présente sous la forme d'un entraînement thermique dans la chambre, réalisée sous la forme d'un extracteur (20), du circuit de solvant (15).

9. Ensemble de sortie de lumière (10) selon la revendication 8,
**caractérisé en ce**
**que** la machine frigorifique à absorption (100) se trouve dans un boîtier (8) comprenant des sources de lumière (1).

10. Procédé servant à refroidir (100) un ensemble de sortie de lumière (10) comprenant des éléments lumineux (1), en particulier des LED, à l'aide d'un système de refroidissement (100, 20, 30, 40, 50) couplé de manière thermique aux éléments lumineux (1),
**caractérisé en ce**
**que** la chaleur d'un dissipateur thermique (8) couplé aux sources de lumière (1) chauffe l'extracteur (20) d'une machine frigorifique à absorption (100).
